# EUROPEAN PATENT APPLICATION

(11) **EP 2 484 225 A1**
(43) Date of publication of application: **08.08.2012**
(21) Application number: 12154111.4
(22) Date of filing: 06.02.2012
(51) Int. Cl.: A23G 9/24, A23G 9/28, A23G 9/48

(54) **Frozen food product and method for depositing a sauce into a frozen food product**

(30) Priority: 07.02.2011 WO PCT/US2011/023914
(71) Applicant: General Mills Marketing, Inc., Minneapolis, MN 55440 (US)
(72) Inventor: Passet, Loic, 62580 Vimy (FR); DaSilva, Eric, 62580 Givenchy en Gochelle (FR); Le Pennec, Nadége, 62000 Dainville (FR)
(74) Representative: Vossius & Partner

(57) **Abstract**

Method for injecting a sauce into a frozen food product. An embodiment of the method includes the step of inserting a nozzle having one or more openings along the lateral surface of the nozzle to a depth below the surface of a frozen food product, such as ice cream or frozen yogurt, contained in a package. The sauce is injected laterally outward from the one or more openings in the nozzle. In some embodiments, the sauce deposit generally has a cross-sectional profile with a lateral dimension that is greater than its vertical dimension as opposed to a more bulbous shape.

## Description

### Field of the Invention

The present invention generally relates to novel frozen food items and methods and systems for their production, particularly to frozen food items, for example in the form of containerized ice cream, gelato, or frozen yogurt, having a sauce deposit within the food item.

### Background of the Invention

Frozen food products, such as ice cream-like desserts, are currently available with a sauce, such as chocolate, caramel, peanut butter and the like, mixed or otherwise dispersed throughout the food product. In some frozen food products, the sauce can be presented in the form of a discrete deposit, also referred to as a heart-of-sauce (HOS). Such discrete sauce deposits are typically found in frozen food products contained in packages smaller than quart-sized, such as pint-sized or in cups or other small containers and generally for individual servings. Some examples of frozen food products are frozen ice cream-like desserts such as ice cream, gelato, frozen custard, sherbet, sorbet and frozen yogurt.

In commercially available frozen ice cream-like desserts with discrete sauce deposits, the deposits are typically deposited from an injection system having a nozzle or injection head having an open tip from which the sauce is injected or extruded. Sauce deposits injected from systems with open tip nozzles are injected downward (or in direction of the bottom of container or package) and form a deposit generally located below the injection point and a bulbous or "bowl" shape, more or less circular or mound-like shape. When extruded, the ice cream and the sauce may be co- extruded to and tend to have tubular in shape. Some sauce deposits are formed by molding techniques and the ice cream-like dessert can be deposited over and/or around the molded sauce deposit or the ice cream-like dessert is molded into a shape and the sauce deposited within the molded ice cream-like dessert. Sauce deposits formed by molding or injection are often located at a distance from the surface of the product so as not to be readily accessible to the consumer. This can make for a less enjoyable experience for the consumer who has to dig or break through the product with a utensil in order to consume the ice cream-like dessert with sauce or consume an amount of the dessert before being able to consume both together. Also, when the nozzle or injection head used in prior art methods is removed from the frozen food product, a trailing "tail" or "wick" of sauce often follows the nozzle as it exits and may lay partially on the exposed surface of the product. A tail or wick of sauce is sometimes desirable, providing a home-made appearance. However, for some product markets its presence is undesirable because the food product has a nonuniform appearance.

Commercially available ice cream-like dessert products with a heart-of-sauce deposit require artificial additives, such as stabilizers and emulsifiers, blended into the sauce in order to maintain the sauce in position where deposited; and the ice cream-like desserts themselves also include artificial additives and/or preservatives.

It would be desirable to provide an ice cream-like dessert product having a HOS deposited so as to be more readily accessible in order to give consumers a more enjoyable experience. It would also be desirable to provide an all natural ice cream-like dessert product having a more readily accessible heart of sauce.

### Summary of the Invention

Embodiments of the invention include sauce deposition methods, frozen food products having a sauce deposit, and frozen food product having a sauce deposit prepared by the method

In an embodiment according to the invention, a method of forming a sauce deposit in a frozen food products contained in a package is provided. The method of this embodiment comprises the steps of: inserting a nozzle to a depth below an exposed product surface, the nozzle having a lateral surface and one or more openings in the lateral surface, the frozen product having a vertical thickness, the one or more openings being located below the exposed product surface when inserted; and injecting a sauce into the frozen food product outward from the nozzle openings to form a sauce deposit.

In another embodiment according to the invention, a method for deposition of a sauce in a frozen food product contained in a package is provided. The sauce deposition method of this embodiment comprises the steps of: a) providing a plurality of cups containing a frozen food product; b) providing a sauce injector or a sauce injection station having a plurality of nozzles, each having a lateral surface, a closed tip at one end and an opposite end that is connected to and in flow-through communication with a source of pressurized sauce, the nozzle having one or more openings in the lateral surface; c) providing a conveyor for conveying the plurality of cups along a processing line and to the sauce injector; d) inserting the plurality of nozzles into the frozen product contained in the plurality of cups; and e) injecting the sauce into the frozen food product from the openings to deposit the sauce laterally outward from the nozzle to form a sauce deposit.

In a further embodiment according to the invention, a method for injecting a sauce into a package containing a frozen food product is provided. The method of this embodiment comprises the steps of: a) determining the temperature of the frozen food product, the frozen food product having an exposed product surface and a vertical thickness; b) determining the temperature of the sauce; c) adjusting as necessary the temperature of the frozen food product and/or the sauce; d) providing a sauce injector having a nozzle with a lateral surface, a closed tip at one end and an opposite end that is connected to and in flow-through communication with a source of pressurized sauce, the nozzle having one or more openings in the lateral surface; e) inserting the nozzle to a depth below the product surface with the one or more openings below the product surface; f) injecting sauce into the frozen food product at a pressure or flow rate sufficient to deposit the sauce laterally outward from the nozzle; g) removing the nozzle; and h) routing the package containing the frozen food product for further processing and/or handling. The embodiment of the invention may further include determining the viscosity of the frozen product and/or determining the viscosity of the sauce.

In some embodiments of a method according to the invention, the nozzle has a closed end and an open end and the one or more openings are in flow through communication with the open end which is connected to a sauce delivery apparatus configured to delivery pressurized sauce to the nozzle.

In some embodiments of a method according to the invention, the sauce can be injected at a predetermined pressure or flow rate based on the temperature and/or viscosity of both the frozen food product and the sauce. I

Some embodiments of invention can include a nozzle removing step. In such embodiments, the removing step can be carried so as to leave a trailing tail of sauce on the exposed surface of the product. Yet in other embodiments the removing step can be carried out without leaving a trailing sauce tail on the exposed surface of the product.

In some other embodiments of a method according to the invention, a cut-off device upstream of the nozzle can be provided and engaged to stop or reduce any residual flow to the nozzle prior to removing the nozzle from the frozen food product.

In an embodiment according to the invention, a frozen food product is provided. The frozen food product of this embodiment comprises a containerized ice cream like dessert having a sauce deposit injected outwardly from a plurality of openings in a lateral surface of a nozzle.

In another embodiment according to the invention, a containerized frozen food product is provided. The containerized frozen food product of this embodiment is comprised of an ice cream-like dessert in a container and a sauce deposit formed by the steps of: inserting a nozzle to a depth below an exposed product surface, the nozzle having a lateral surface and one or more openings in the lateral surface, the one or more openings being located below the exposed product surface when inserted; and injecting a sauce into the ice cream-like dessert laterally outward from the one or more openings in the nozzle.

In yet another embodiment according to the invention, a containerized frozen food product is provided. The containerized food product of this embodiment comprises an ice cream-like dessert in a container and a sauce deposit formed by an embodiment of the method of the invention.

### Brief Description of the Drawings:

Figure 1 is a photographic image of a packaged frozen food product prepared according to an embodiment of the invention shown in cross-sectional view..
Figure 2 is a photographic image of a prior art packaged food product prepared according to a prior art injection method shown in cross-sectional view.
Figure 3 is a side view of a nozzle useful in a method according an embodiment of the invention.
Figure 4 is a side view of a nozzle useful in a method according an embodiment of the invention.
Figure 5 is a sectional view of a rotary valve delivery system in with a rotor and a piston in initial positions.
Figure 6 is a sectional view of a rotary valve delivery system with the rotor in an initial position and the piston in a loading position.
Figure 7 is a sectional view of a rotary valve delivery system with the rotor in a dosing position and the piston in a loading position.
Figure 8 is a sectional view of a rotary valve delivery system with the rotor in a dosing position and the piston in a dosing position.

### Detailed Technical Description:

The following detailed description is exemplary in nature and is not intended to limit the scope, applicability, composition or configuration of the invention in any way. Rather, the following description provides practical illustrations for implementing exemplary embodiments of the present invention.

The present invention provides methods for depositing a sauce or a sauce deposit into a containerized or packaged food product, particularly frozen food products, more particularly frozen ice cream-like desserts such as ice cream, gelato, frozen custard, sherbet, sorbet, frozen yogurt and the like.

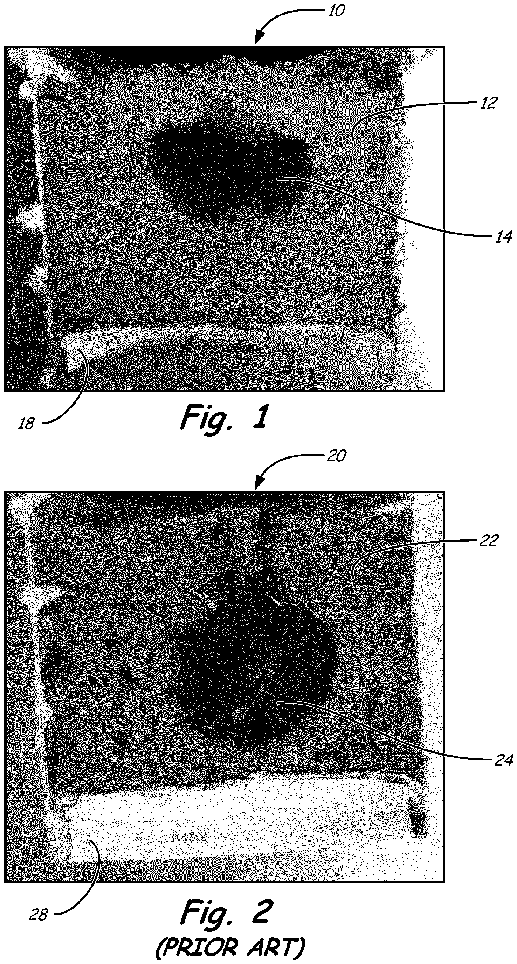

With reference to Figure 1, an example of a frozen food product formed according to an embodiment of the invention is shown in cross-sectional view. The food product 10 includes an ice cream-like dessert 12 and a sauce deposit 14 and is contained in a package 18, shown as a cup in this figure. As can be seen, the profile of the sauce deposit 14 is positioned a distance from the bottom of package 20. In some embodiments, the sauce deposit is positioned so the sauce deposit does not touch the bottom of the package. Further, the deposit 14 does not include a trailing tail or wick of sauce; however, if desired the deposit 14 can be formed with a trailing tail of sauce to provide a "home made" appearance. In some embodiments of the invention, sauce deposit 14 can have a lateral dimension that is greater than its vertical dimension.

Figure 2 depicts a prior art food product 20 similarly includes an ice cream-like dessert 22 and a sauce deposit 24, and is contained in a package 26, a cup in this figure. As can be seen, the sauce deposit 24 of the prior art product 20 has a bulbous or "bowl" shape. This shape is formed by use of a standard nozzle of generally tubular shape having an open tip from which the sauce is injected in a downward direction into an ice cream-like dessert. As can be seen the sauce deposit is positioned in close proximity to the bottom of the cup.

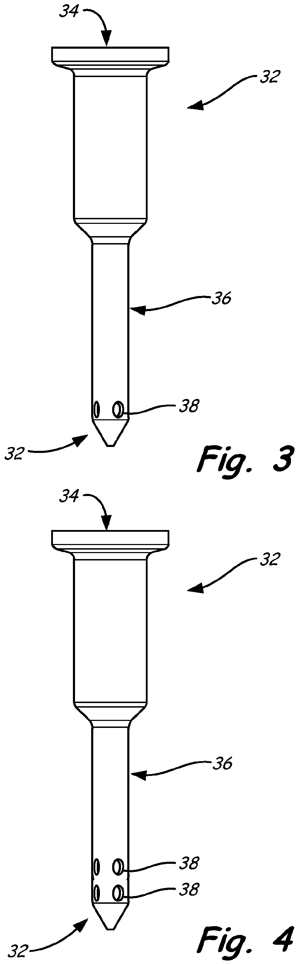

In methods according to the invention, a non-standard nozzle 30, also referred to as an optimized nozzle 30 is utilized to inject a sauce deposit or dose of sauce into an ice cream-like dessert. Two examples of a nozzle 30 useful in embodiments of the method of the invention are shown in Figure 3 in cross-sectional side view and in Figure 4 in cross-sectional view. In each of Figures 3 and 4, nozzle 30 has a closed end 32 and an opened end 34. In use, the opened end 34 is connected to an outlet of an injection or sauce delivery system which in turn is connected to a source containing a prepared sauce composition. During dosing, the closed end 32 is first inserted into the ice cream-like dessert. The closed end 32 may have a rounded tip, a flat tip, pointed tip, or such other shape as may be best suited to the application. Further, the nozzle 30 may have any of various cross-sectional shapes such as circular, oval, triangular, square, rectangular, polygonal, and the like. The nozzle 30 has a lateral surface 36 and one or more openings 38 in or through the lateral surface 36 that are in flow-through communication with the open end 34. The lateral surface 36 of nozzle 30 may be rectilinear, curvilinear, smooth or textured or combinations thereof. The open end 34 is connected to an injection or sauce delivery system (not shown in Figures 3 and 4) configured to deliver a metered amount or dose of sauce under pressure to nozzle 30 and into ice cream-like dessert 12.

Injection or sauce delivery systems known to those skilled in the art can be used in embodiments of methods according to the invention to deliver a dose of sauce. Particularly suitable systems are those configured to meter a predetermined dose or volume of sauce. Examples of suitable injection systems include a variety of pneumatic or motorized delivery systems known to those skilled in the art, e.g., systems employing a rotary valve. Motorized systems, with or without servo-drive motor systems that can deliver viscous fluids or sauce at an appropriate pressure base on temperature of the sauce and/or the ice cream-like dessert. Examples of commercially available injection systems or injectors include, but are not limited to, systems available from manufacturers such as Fill Fast™ dosing systems from Atlantic Engineering of Nazareth, Belgium, rotary fillers from Big Drum Engineering, GmbH of Edertal-Giflitz, Germany, and liquid filling and dosing systems from NCA Technologies of Strepy-Bracquegnies, Belgium and Apple International, Ltd. of Hull - East Yorkshire, United Kingdom.

Additionally, the injection system preferably is equipped to keep the sauce to be delivered at a desired temperature or within a desired temperature range. The sauce delivery system or dosing system can be connected to a buffer tank or other sauce storage container that is configured to regulate temperature and feed sauce to the injection system.

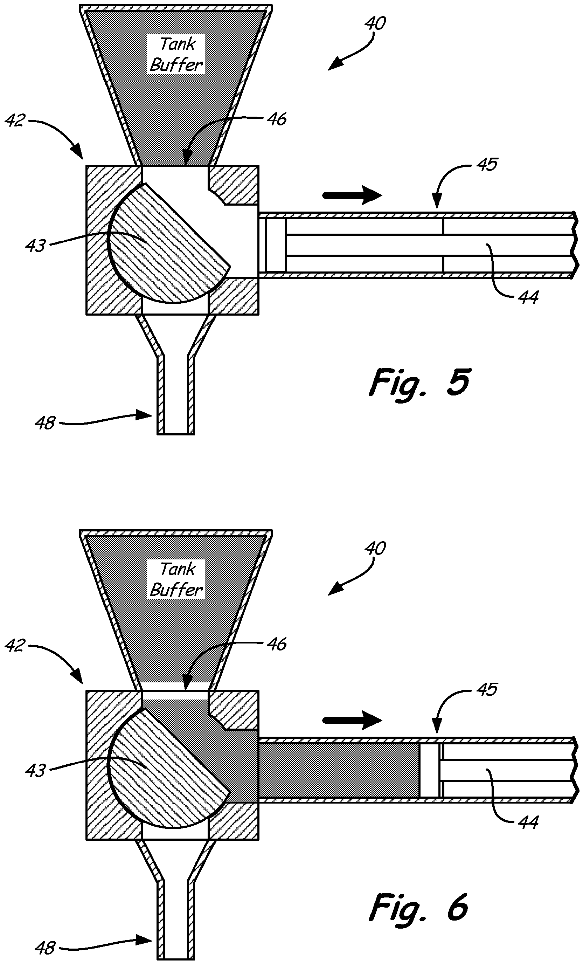

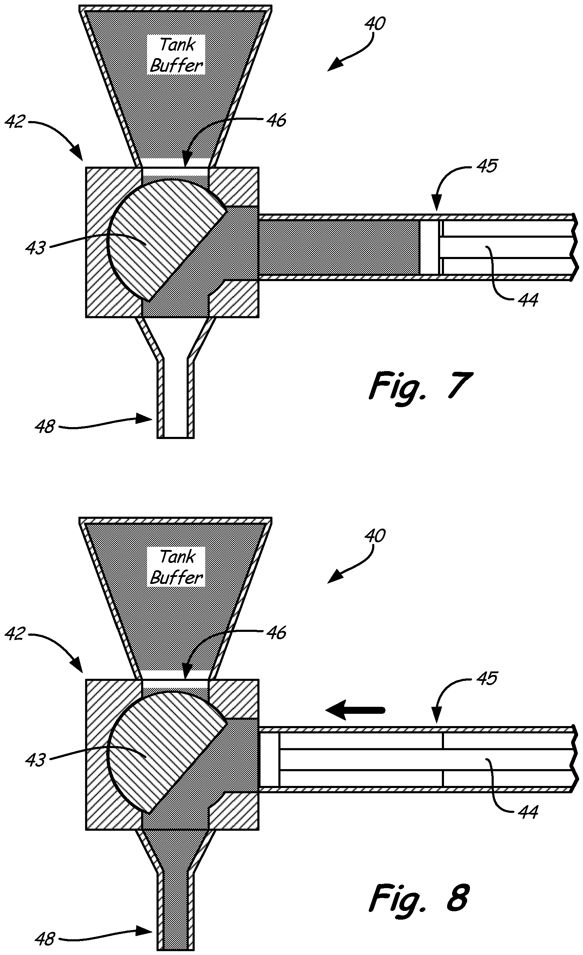

Referring to Figures 5-8, the operation of an injection system 40 is shown and for purposes of illustration the system is as a rotary valve pneumatic delivery system 40. Rotary valve pneumatic delivery system 40 has a housing 42 having an interior volume, a rotor 43 disposed within the interior volume and configured for movement to a plurality of positions, a piston 44 (also referred to as a "plunger 44") disposed within a shaft 45 that is in fluid communication with the interior volume of housing 42, an inlet 46 connected to a buffer tank or other sauce storage container, and an outlet 48. Inlet 46 and outlet 48 each can be brought into fluid communication with the interior volume of housing 42 by movement of rotor 43 from one position to another position. In Figure 5, the both rotor 43 and piston 44 are in initial positions and the internal volume, as illustrated, is empty. In Figure 6, piston 44 is shown in loading position with piston 44 having been moved a distance away from the housing so as to draw a volume of sauce into the housing 42 and shaft 45. The dose or specific volume to be injected into the frozen food product is generally represented by the amount of sauce within the shaft 45 between the piston 44 and the internal volume of the housing 42. In Figure 7 rotor 43 is rotated to a dosing position so that outlet 48 is in fluid communication with the internal volume of housing 42. In Figure 8, the piston 44 is shown in dosing position with piston 44 having been driven or pushed to its initial position forcing the dose of sauce out, at a certain velocity or flow rate or given pressure, through the outlet. The outlet is connected to nozzle 30 (not shown); and in an embodiment of the method of the invention, the dose would be injected from nozzle 30 which had been inserted or positioned in a containerized ice cream-like dessert.

During the dosing process, piston 44 pushes the sauce through piping connecting the injection system to nozzle 32 and out of openings 38. After the piston has returned to its initial position in preparation for another dosing cycle, sauce deposition has essentially stopped. However, due perhaps to capillarity or capillary effects, some amount of sauce may continue to flow as the nozzle 40 is withdrawn from the ice cream-like dessert. Part of this continued flow may be deposited on the surface of the ice cream-like dessert as what is referred to herein as a trailing tail of sauce. Depending upon the amount of the continued flow the tail may be slight, appearing as a swirl or line of sauce on the surface of the ice cream-like dessert, or it could be of sufficient volume to leave a sizable deposit of sauce or a major tail of sauce on the surface or create weight variations in packaged product. If the continued flow is of sufficient volume, it can result in waste as the next package product or row of packaged product is moved into dosing position. Also, it can result in a pool of sauce being deposited on the surface of the product before the nozzle has been inserted into the product. As there can be variation in capillarity from dosing cycle to dosing cycle, there also can be variation in resulting different tail sizes or volumes and a lack of uniformity in the packaged product.

Increased control of the dosing step can minimize such variations between dosing cycles. One way to obtain this increased control is to insert a cut-off device, e.g., a closing valve, between nozzle 32 and injection system 40. A cut-off device is a device that can stop or reduce the continued flow of sauce at the end of a dosing cycle by blocking the flow of sauce to the nozzle. The use of a cut-off device helps ensure a low flow of residual from nozzle 32. Any of variation apparatus know to those skilled in the art to be suitable as a cut-off device can used. One example of a commercially available device is a closing valve, such as the GEMU 660 diaphragm valve available from GEMÜ S.a.r.l. of Molsheim Cedex, France.

Various upstream processing steps can proceed the sauce deposition steps which can be followed by various downstream processing steps. The upstream processing steps may include one or more of preparing of the frozen food product or ice cream-like dessert, packaging or containerizing the product, freezing, chilling, storing, conveying the packaged food product to a sauce injection system or deposition station, and others known to those skilled in the art. Downstream processing steps may include conveying the packaged food product from the injection station, sealing or applying a lid to the food product, other package completion steps, hardening, storage, shipping and other handling.

In an embodiment of the invention, the injector or injection system can be connected on the upstream side to a temperature controlled container, such as a buffer tank, that contains the sauce to be delivered. The temperature controlled container can be equipped or configured to cool the sauce or maintain the sauce at a given temperature or within a given temperature range. The temperature controller container can also be configured to continuously stir or agitate the sauce to maintain the sauce at a fairly uniform or homogenous temperature throughout.

Methods of preparing ice creams, gelatos, and frozen yogurts are known to those skilled in the art. Ice creams can be prepared from natural and/or artificial ingredients. In some embodiments of the invention, the ice cream or ice cream-like dessert is prepared with all natural ingredients, such as cream, condensed skimmed milk, egg yolk, sugar, sucrose, caramel, water, cocoa powder, and vanilla extract. In other embodiments of the invention, the ice cream or ice cream-like dessert is prepared only with all natural ingredients, without artificial ingredients or additives. Examples of ice creams made with only all natural ingredients are Häagen-Dazs® brand ice creams. Other ice cream-like frozen desserts made with all natural ingredients are also available from Häagen-Dazs.

A variety of sauces can be used in the methods of the invention. For example, chocolate, caramel, butterscotch, fruit, honey, or any variety of other flavored sauces or other flowable confection.

In some embodiments of methods of the invention, a chocolate sauce can be provided in the form of a syrup, such as a chocolate, dark chocolate, chocolate liquor, semi sweet chocolate, cocoa, Dutch cocoa or milk chocolate syrup. In one such embodiment, the milk chocolate syrup can be composed of sucrose, water, milk chocolate, and cocoa. Another suitable chocolate syrup is a chocolate syrup composed of sucrose, water, sweet chocolate, and cocoa. Other ingredients known to those skilled in the art may be included. For example, if a low water activity chocolate sauce is desired, the water activity can be achieved via addition and/or adjustment of the weight percentage of optional ingredients such as fructose, sucrose, glucose, propylene glycol, glycerol, polyhydric alcohols (for example, mannitol, lactitol, isomalt, xylitol, sorbitol, maltitol), sodium chloride and combinations thereof, based upon the total weight of the low water activity sweet brown base component. In some embodiments, the sweet brown base component can exhibit a water activity (potassium chloride calibration) of 0.85 or less. In some embodiments, the chocolate sauce can be characterized as having a total fat content in the range of 0% to about 25%. Exemplary fat components include, but are not limited to, cocoa butter, vegetable oil, vegetable shortening, butter, dairy cream and mixtures thereof.

In some embodiments, the chocolate sauce can be characterized as having a total sweetening agent content of up to about 75%. Exemplary sweetening agents include, but are not limited to, sucrose, high fructose corn syrup, dextrose, various DE corn syrups, beet or cane sugar, invert sugar (in paste or syrup form), brown sugar, refiner's syrup, molasses, fructose, fructose syrup, maltose, maltose syrup, dried maltose syrup, malt extract, dried malt extract, malt syrup, dried malt syrup, honey, maple sugar, and mixtures thereof.

When the chocolate sauce comprises a chocolate base, such chocolate bases can be obtained from any of a variety of commercial sources (for example, Degussa Food Ingredients, Gmbh, Trostberg, Germany, The J. M. Smuckers Company, Orrville, Ohio, and Atys US Inc., Brecksville, Ohio). An all natural chocolate sauce can be prepared with, for example, glucose syrup, sweetened whole condensed milk, chocolate or sugar, cocoa mass, cocoa powder, and water. An all natural caramel sauce can be prepared with sugar, water and pectin. Sauces made of only natural ingredients would not include any artificial additives, and preferably without any color, flavor or stabilizing agents.

Fruit flavored sauces can be provided as a sauce or puree and can be any of a variety of conventional fruit flavorings commonly used in frozen ice cream-like desserts. Typical flavorings include strawberry, raspberry, blueberry, strawberry-banana, boysenberry, cherry-vanilla, peach, pineapple, lemon, orange, and apple. Fruit flavored sauces will include fruit preserves and fruit or fruit puree, with any of a combination of sweeteners, starch, stabilizer, natural and/or artificial flavors, colorings, preservatives, water, and citric acid, lemon juice or other suitable acid or acid source to control the pH. Minor amounts of calcium can be added to the fruit to control the desired texture of the fruit preparation typically provided by a soluble calcium material such as calcium citrate. Other additives may be included in some formulations for fruit flavored sauces.

In some embodiments of methods according to the invention, the sauce if prepared (rather than purchased) can be cooked in a processing vessel, such as a kettle and then transferred from the kettle or similar vessel to a temperature controlled container for storage and then pumped or fed to an injection system through an optimized nozzle 32.

In an embodiment of a method of the invention, an optimized nozzle 32 is inserted to a depth below an exposed surface of a frozen food product with the openings 38 in the nozzle's lateral surface below the surface of the food product. Next, the sauce is injected outward from the openings in the lateral surface. In some embodiments, the sauce is injected laterally outward from the nozzle. The sauce is injected at a pressure or flow rate sufficient to dispense the sauce from the nozzle and to penetrate an ice cream-like dessert. In some embodiments, the sauce deposit can have a profile that has a lateral dimension that is greater than its vertical dimension.

In another embodiment of a method of the invention, a plurality of cups or other packages containing a frozen food product is provided. A sauce injector or sauce injection system is provided. The sauce injector of this embodiment has a plurality of optimized nozzles having at least one opening in the nozzles' lateral surfaces. The nozzles with a lateral surface, a closed tip at one end and an opposite end that is connected to and in flow-through communication with an injection system or other source of pressurized sauce. A conveyor is provided for conveying the plurality of cups along a processing line and to the sauce injector. The plurality of nozzles are inserted into the frozen product contained in the plurality of cups, and the sauce is injected into the frozen food product from the openings to deposit the sauce outward from the nozzle. In a variation of the injection step, the sauce is injected laterally outward from the nozzle openings. In a further variation of the injection step, the sauce is injected laterally outward from the nozzle openings to form a sauce deposit having a lateral dimension that is great than its vertical dimension.

Another embodiment of the method of the invention is now described. The temperature and/or viscosity of the frozen food product is determined. The frozen food product in this embodiment has an exposed product surface and a vertical thickness. The temperature and/or viscosity of sauce is determined. As necessary, the temperature of the frozen food product and/or the sauce can be adjusted to a target temperature or to obtain a desired or target viscosity. A sauce injector (or a sauce injection station) is provided. The sauce injector has a nozzle with a lateral surface, a closed tip at one end and an opposite end that is connected to and in flow-through communication with a source of pressurized sauce. The nozzle has one or more openings in it lateral surface. The nozzle is inserted into the frozen food product to a depth below the product surface with the one or more openings below the product surface. After insertion, sauce is injected into the frozen food product at a pressure or a flow rate sufficient to deposit the sauce outward from the nozzle openings. In a variation of the injection step, the sauce is injected at a pressure or a flow rate sufficient to deposit the sauce laterally outward from the nozzle openings. In a further variation of the injection step, the sauce is injected at a pressure or a flow rate sufficient to deposit the sauce laterally outward from the nozzle openings to form a sauce deposit having a lateral dimension that is great than its vertical dimension. After the sauce injection, the nozzle is removed. The package containing the frozen food product dosed with sauce can be routed for further processing and/or handling.

In Figure 1, a frozen food product 12 is contained in a cup 20 with a sauce deposit 14. The frozen food product 12, ice cream with sauce deposit, shown in Figure 1 has a volume of approximately 100 ml and a vertical thickness of about 40 mm. In Figure 1, the sauce deposit is shown as a single discreet deposit. While deposits formed according to embodiments of the invention can have various shapes, deposit 14 of Figure 1 has a lateral dimension that is greater than its vertical dimension instead of the characteristic bulbous or "bowl" shape of prior art injection methods shown in Figure 2. The single deposit is formed by a single nozzle. However, for some frozen food products, the product may be of a size or configurations where two or more nozzles are injected into the same packaged product to form a plurality of sauce deposits and/or conjoined sauce deposits.

As previously mentioned the sauce is delivered to the nozzle under pressure and the pressure needs to be sufficient to dispense the sauce outward from the nozzle. The pressure or force need to dispense the sauce depends primarily upon a few variables or properties, the temperatures and viscosities of the frozen food product and of the sauce. The colder the temperature the more viscous or dense the food product will be and the great the pressure required to dispense the sauce laterally outward from the nozzle openings. If the temperature and viscosity of the food product is lower, less pressure is generally required; but the food product or ice cream-like dessert generally needs to be at a low enough temperature to provide the solidity or firmness to support a sauce deposit. Also, as a general principle, the higher the viscosity of the sauce, the more pressure that is required to cause the sauce to flow out of the nozzle and to penetrate into the frozen food product. Viscosity of the frozen food product and the sauce, as well as, flowability of the sauce can also be affected by the composition of the food product and/or of the sauce. The sauce should be delivered or injected at an appropriate temperature

Some capabilities of methods according to embodiments of the invention can be further understood from the examples and comparative examples presented below.

A chocolate ice cream was prepared with the following all natural ingredients: cream, condensed skimmed milk, egg yolk, sugar, water, cocoa powder. The ingredients were mixed using a large tank such as a GoAvec brand mixing tank in which all ingredients are blended together. The ice cream mixture (or ice cream-like dessert composition) was pasteurized, frozen, and maintained at a temperature of no more than about 32° F (+4°C).

For the examples, the ice cream was deposited into cups and held at a temperature of from about 23° F (about -4.6°C) to about 24° F (about -4.5°C). A batch of prepared chocolate sauce was stored and held at a temperature of from about 38 ° F (about +3.5°C) to about 45°F (about +7°C) and delivered at a temperature within that range. The prepared ice cream was deposited into cups and dosed with a sauce using optimized nozzles to produce examples according to embodiments of the invention and using a standard nozzle to produce comparative examples. In both the examples and comparative examples, the combined overall volume of the ice cream and sauce deposit was approximately 100 ml and the ice cream as deposited in the containers had an approximate depth of about 40 mm.

Below Table 1 presents results for frozen ice creams with a sauce deposit formed according to embodiments of the method of the invention and Table 2 presents the results for the comparative examples.

**Table 1 - Examples**

| Example No. | Ice Cream Temp. in the Cup (° C) | Sauce Temp. in Buffer Tank °C | Sauce Temp. in the Cup (° C) | Sauce Position (average distance) |
|---|---|---|---|---|
| 1 | -4.5 | 4 | 7 | 17 mm from bottom of cup |
| 2 | -4.9 | 4 | 7 | 18 mm from bottom of cup |
| 3 | -4.9 | 7 | 10 | 11 mm from bottom of cup |
| 4 | -5.3 | 7 | 10 | 16 mm from bottom of cup |

**Table 2 - Comparative Examples**

| Example No. | Ice Cream Temp. in the Cup (° C) | Sauce Temp. in Buffer Tank °C | Sauce Temp. in the Cup (° C) | Sauce Position (average distance) |
|---|---|---|---|---|
| 1 | -4.5 | 4 | 7 | 2 mm from bottom of cup |
| 2 | -4 | 4 | 7 | 0 mm from bottom of cup |
| 3 | -4.4 | 6.4 | 9.6 | 0 mm from bottom of cup |
| 4 | -5 | 6.4 | 9.6 | 2 mm from bottom of cup |

The data shows that the method of the invention can be carried out at different temperatures with an optimized nozzle to deposit a heart-of-sauce space away from the bottom of a container. Further, the data shows that if desired, the heart-of-sauce can be deposited with an optimized nozzle according to the invention above a minimum distance (10 mm for the examples) from the bottom of the container or package with controlled deposition. And, under comparable ice cream and sauce temperature, the heart-of-sauce of the comparative examples were not consistent spaced away from the bottom of the container and that the controlled deposition of the invention was not obtained with a standard nozzle.

It should be understood sauce deposits can be injected a different distances from the bottom of the container in which the ice cream-like dessert is contained and the invention is not limited to deposition of sauce with a specific distance from the bottom of a container. Further, while examples were packaged or containerized in paper cups, the method of the invention can be utilized with frozen food products contained in a variety of containers and formed of a variety of material. Any container suitable for use in the packaging of frozen ice cream-like desserts may be used. For example, containers may be formed of paper-based material, plastics, biodegradable or recyclable materials, glass, and other materials known to be suitable by those skilled in the art.

While exemplary embodiments of this invention and methods of practicing the same have been illustrated and described, it should be understood that various changes, adaptations, and modifications may be made therein without departing from the spirit of the invention and the scope of the appended claims.

## Claims

**1.** A sauce deposition method for frozen food products contained in a package, comprising the steps of:
inserting a nozzle to a depth below an exposed product surface, the nozzle having a lateral surface and one or more openings in the lateral surface, the frozen product having a vertical thickness, the one or more openings being located below the exposed product surface when inserted; and
injecting a sauce into the frozen food product outward from the nozzle openings to form a sauce deposit.

**2.** The method of claim 1, wherein the nozzle has a closed one end and an open end and the one or more openings are in flow through communication with the open end which is connected to a sauce delivery apparatus configured to delivery pressurized sauce to the nozzle.

**3.** The method of claim 1 or 2, wherein the sauce is injected at a predetermined pressure or flow rate based on the temperature and viscosity of both the frozen food product and the sauce.

**4.** The method of any one of claims 1 to 3, wherein the frozen food product is an ice cream-like dessert.

**5.** The method of any one of claims 1 to 3, wherein the frozen food product is an ice cream.

**6.** The method of any one of claims 1 to 5, wherein the sauce comprises chocolate, caramel, butterscotch, fruit, honey, or other fluid confection.

**7.** The method of any one of claims 1 to 6, wherein the frozen food product is ice cream and both the ice cream and sauce are prepared from all natural ingredients, without artificial additives.

**8.** The method of any one of claims 1 to 7, wherein the package is a cup.

**9.** The method of any one of claims 1 to 8, wherein the sauce deposit has a lateral dimension that is greater than is vertical dimension.

**10.** The method of any one of claims 1 to 9, further comprising the step of removing the nozzle from the frozen food product and leaving a trailing tail of sauce on the exposed surface of the product.

**11.** The method of any one of claims 1 to 10, wherein the sauce is injected at a pressure or flow rate sufficient for the sauce to penetrate the frozen food product and form the sauce deposit.

**12.** The method of any one of claims 1 to 9 and 11, further comprising the step of removing the nozzle from the frozen food product without leaving a trailing sauce tail on the exposed surface of the product.

**13.** The method of any one of claims 1 to 11, further comprising the step of removing the nozzle from the frozen food product leaving a trailing sauce tail on the exposed surface of the product.

**14.** The method of any one of claims 1 to 13, further comprising the steps of:
removing the nozzle after the sauce deposit is formed.

**15.** The method of any one of claims 1 to 14, further comprising the steps of:
engaging a cut-off device upstream of the nozzle to stop or reduce any residual flow to the nozzle; and removing the nozzle from the frozen food product.

**16.** A sauce deposition method for frozen food product, comprising the steps of:
a) providing a plurality of cups containing a frozen food product ;
b) providing a sauce injector or a sauce injection station having a plurality of nozzles, each having a lateral surface, a closed tip at one end and an opposite end that is connected to and in flow-through communication with a source of pressurized sauce, the nozzle having one or more openings in the lateral surface;
c) providing a conveyor for conveying the plurality of cups along a processing line and to the sauce injector;
d) inserting the plurality of nozzles into the frozen product contained in the plurality of cups; and
e) injecting the sauce into the frozen food product from the openings to deposit the sauce laterally outward from the nozzle to form a sauce deposit.

**17.** A method for injecting a sauce into a package containing a frozen food product, comprising the steps of:
a) determining the temperature of the frozen food product, the frozen food product having an exposed product surface and a vertical thickness;
b) determining the temperature of the sauce;
c) adjusting as necessary the temperature of the frozen food product and/or the sauce;
d) providing a sauce injector having a nozzle with a lateral surface, a closed tip at one end and an opposite end that is connected to and in flow-through communication with a source of pressurized sauce, the nozzle having one or more openings in the lateral surface;
e) inserting the nozzle to a depth below the product surface with the one or more openings below the product surface;
f) injecting sauce into the frozen food product at a pressure or flow rate sufficient to deposit the sauce laterally outward from the nozzle;
g) removing the nozzle; and
h) routing the package containing the frozen food product for further processing and/or handling.

**18.** The method of claim 17, wherein determining step a) further includes determining the viscosity of the frozen food product, and wherein determining step b) further includes determining the viscosity of the sauce.

**18.** A containerized frozen food product, the product comprising a ice cream-like dessert in a container, and a sauce deposit formed by the steps of:
inserting a nozzle to a depth below an exposed product surface, the nozzle having a lateral surface and one or more openings in the lateral surface, the one or more openings being located below the exposed product surface when inserted; and
injecting a sauce into the ice cream-like dessert laterally outward from the one or more openings in the nozzle.

**19.** A containerized frozen food product, the product comprising an ice cream-like dessert in a container, and a sauce deposit formed by the method of any one of claims 1-17.

**20.** A containerized food product, the product comprising a containerized ice cream like dessert having a sauce deposit injected outwardly from a plurality of openings in a lateral surface of a nozzle.
